# EUROPÄISCHE PATENTSCHRIFT

(11) **EP 2 898 104 B1**
(45) Veröffentlichungstag und Bekanntmachung des Hinweises auf die Patenterteilung: **28.02.2018**
(21) Anmeldenummer: 13763247.7
(22) Anmeldetag: 17.09.2013
(51) Int. Cl.: C21C 5/52, F27B 3/08, F27D 21/00, G01F 23/28, H05B 7/148

(54) **VERFAHREN ZUM BETREIBEN EINES LICHTBOGENOFENS**
METHOD FOR OPERATING AN ARC FURNACE
PROCÉDÉ POUR FAIRE FONCTIONNER UN FOUR À ARC

(30) Priorität: 24.09.2012 UA 2012011113
(43) Veröffentlichungstag der Anmeldung: 29.07.2015
(73) Patentinhaber: SMS group GmbH, 40237 Düsseldorf (DE)
(72) Erfinder: GRYGOROV, Pavlo, 80637 München (DE); ODENTHAL, Hans-Jürgen, 40822 Mettmann (DE); SCHULZE, Stephan, 40668 Meerbusch (DE); WEDELL, Tobias, 40489 Düsseldorf (DE)
(74) Vertreter: Klüppel, Walter
(86) Internationale Anmeldenummer: PCT/EP2013/069238
(87) Internationale Veröffentlichungsnummer: WO 2014/044662

(56) Entgegenhaltungen:
- EP-A1- 2 302 080
- WO-A1-2011/147869
- DE-A1-102010 025 236
- US-B1- 6 793 708

## Beschreibung

Die Erfindung betrifft ein Verfahren zum Betreiben eines Lichtbogenofens, wobei der Lichtbogenofen ein Aufnahmegefäß für schmelzflüssiges Material sowie mindestens eine Elektrode umfasst, wobei die Elektrode an einem Tragarm angeordnet ist und von diesem gehalten wird, wobei in das Aufnahmegefäß ein Schaumschlackenbildner eingegeben wird, um auf dem schmelzflüssigen Material eine Schicht Schaumschlacke mit einer Höhe zu bilden.

Bei der Elektrostahlerzeugung wird in einem Elektrolichtbogenofen (EAF) über die stromführenden Tragarme und Elektroden eingebrachte elektrische Energie in Joulesche Wärme der Lichtbögen umgesetzt. Jeder Lichtbogen brennt zwischen der Elektrode und dem Einsatzstoff, bis dieser vollständig eingeschmolzen ist. Die damit im Hochstromkreis fließenden Sekundärströme erreichen Werte bis zu 120 kA.

Bei einem (Drehstrom)Pfannenofen handelt es sich um ein metallurgisches Aggregat, das zum Aufheizen und zur Behandlung von Flüssigstahl eingesetzt wird. Auf diese Weise lassen sich gewünschte Gießtemperaturen und chemische Analysen erreichen. Ein Pfannenofen besteht aus stromführenden Elektroden, wassergekühlten Elektrodentragarmen, einem feuerfesten Gefäß, einem wassergekühlten Deckel mit diversen Öffnungen für die Elektroden und die Legierungsmittelzugabe. Das Aufheizen des Flüssigstahls erfolgt durch eine Umwandlung der über die stromführenden Tragarme und Elektroden eingebrachten elektrischen Energie in Wärme. Die Einstellung der gewünschten elektrischen Leistung erfolgt durch eine Elektrodenregelung. Damit wird die Lichtbogenlänge durch das Positionieren der Elektroden geändert. Um die Wirkung der Lichtbogenstrahlung auf feuerfeste Zustellung zu minimieren, wird ein Pfannenofen mit kurzen Lichtbögen betrieben, diese werden von einer dünnen Schlackenschicht (50 bis 150 mm) abgedeckt.

Gattungsgemäße Verfahren sind im Stand der Technik bekannt. Es wird beispielsweise auf die EP 0 637 634 A1 und auf die EP 2 302 080 A1 hingewiesen. Die DE 196 36 279 A1 beschäftigt sich mit der Messung periodischer Bewegungen der Elektrode des Lichtbogenofens. Die EP 1 082 467 B1 sieht vor, dass der Schlackenbildner in Abhängigkeit des Stroms der Elektrode geregelt wird. In der WO 2009/095396 A1 werden die Schwingungen der Elektroden im Elektrolichtbogenofen erfasst. Eine ähnliche Lösung zeigt die WO 2011/147869 A1.

Die entstehenden elektromagnetischen Kräfte wirken mit der Netz- und Doppelnetzfrequenz auf die stromführenden Elektroden und Tragarme und rufen erzwungene Schwingungen des Elektroden-Tragarm-Systems hervor.

Im Schwingungsspektrum unterscheidet man hoch- und niederfrequente Komponenten. Die hochfrequenten Schwingungen - bei 50 Hz und 100 Hz - werden vom Lichtbogenschub und entsprechend von der Lorentz-Kraft verursacht. Bei niederfrequenten Schwingungen - von 1 Hz bis 10 Hz - handelt es sich um die Eigenschwingungen des Elektroden-Tragarm-Systems, die mechanisch (beim Schrotteinsturz) oder elektrisch (bei der Änderung der Lichtbogenlänge) angeregt werden. Bei ungünstiger Konstruktion der Tragarme können in diesem Frequenzbereich Resonanzschwingungen des Elektroden-Tragarm-Systems auftreten, die die Gefahr von Elektrodenbrüchen bergen. Elektrodenbrüche führen in sehr nachteiliger Weise zur Erhöhung der Produktionskosten und längeren Produktionsunterbrechungen im Stahlwerk.

Die Amplituden der Tragarmschwingungen ändern sich während des Schmelzprozesses. In der Bohrphase brennt der Lichtbogen auf den festen Schrott und verursacht relativ große Schwingungsamplituden. In der Flachbadphase beginnt die Schlacke aufgrund des flüssigen Bades und des Einblasens eines Schlackenbildners (zumeist feinkörniger Kohlenstoff) zu schäumen. Die Schaumschlacke verbessert den Energieeintrag ins flüssige Stahlbad und schirmt die Feuerfestausmauerung und das Wasserkühlsystem des Ofens von der starken Strahlenbelastung durch den Lichtbogen ab. Da hierbei der Lichtbogen und die Elektrodenspitze von der Schaumschlacke umhüllt werden, nehmen die Schwingungsamplituden ab. Je größer die Menge, das heißt Masse, des eingeblasenen Schaumschlackenbildners (Kohlenstoff) ist, desto höher ist auch die Höhe der Schaumschlackenschicht und der Dämpfungsgrad der Schwingungen des Elektrodentragarms und desto niedriger sind die Schwingungsamplituden.

Bei einem hohen Stand der Schaumschlacke können die Elektroden weiter aufwärts gefahren werden, der Lichtbogen wird bei gleicher elektrischer Leistung und niedriger Stromstärke länger.

Bei der Konstruktion der stromführenden Elektrodentragarme werden häufig die Eigenfrequenzen der Tragarme nicht berechnet und die die Eigenfrequenz beeinflussenden, prozessbezogenen Faktoren (variable Länge und Masse der Elektrode) nicht berücksichtigt. Während des Ofenbetriebs können die auf das Elektroden-Tragarm-System wirkenden Kräfte einer bestimmten Frequenz zu Resonanzschwingungen führen, die die Graphitelektroden zerstören können. Um das Schwingungsverhalten einer Elektrode zu stabilisieren und die Elektrodenbruchursache zu beseitigen, ist es wichtig, Resonanzschwingungen frühzeitig zu erkennen.

Bei der Elektrostahlerzeugung werden üblicherweise freistrahlige Lichtbögen von der schaumigen Schlacke umhüllt. Hierdurch wird ein optimaler Energieeintrag in das flüssige Bad erreicht und seitliche Strahlungsverluste des Lichtbogens minimiert. Im praktischen Betrieb wird die Schaumschlacke durch Einblasen eines feinkörnigen Kohlenstoffs in die Schlacke erzeugt. Die Menge des eingeblasenen Kohlenstoffs lässt sich vom Bedienpersonal aufgrund von Erfahrungswerten berechnen bzw. bestimmen. Eine überschüssige Menge des Kohlenstoffs kann den Kohlenstoffgehalt in der Schmelze erhöhen (Aufkohlen der Schmelze). Bei einer unzureichenden Menge an Kohlenstoff wird indes der Lichtbogen in nachteiliger Weise nur zum Teil umhüllt. Die Wahl der richtigen Menge an Schaumschlackenbildner ist also mitunter problematisch und unter Umständen personenbezogen abhängig von der Erfahrung des Bedienpersonals.

Da der Flüssigstahl ein schwingungsfähiges System ist, können auch beim Betreiben eines Pfannenofens unerwünschte kritische Schwingungen des Ofengefäßes auftreten. Beim Auftreten solcher Schwingungen soll der Behandlungsprozess durch das kurzfristige Ausschalten der Ofenanlage unterbrochen werden, was aber prozesstechnisch nachteilig ist. Die Schwingungen des Ofengefäßes können von einer falsch eingestellten Elektrodenregelung bzw. von den Tragarmschwingungen hervorgerufen werden.

Der Erfindung liegt die Aufgabe zugrunde, ein Verfahren der gattungsgemäßen Art so weiterzubilden, dass in verbesserter Weise die Schaumschlackenhöhe bestimmt werden kann. Ferner sollen die Voraussetzungen dafür getroffen werden, möglichst ohne individuelle Erfahrungswerte des Bedienpersonals die Zufuhr des Schaumschlackenbildners zu optimieren, das heißt es sollen die auftretenden Schwingungen minimiert werden, wobei gleichzeitig nicht übermäßig viel Schlackenbildner zugegeben werden soll, um ein unerwünschtes Aufkohlen des Stahls zu verhindern.

Die Lösung dieser Aufgabe durch die Erfindung ist dadurch gekennzeichnet, dass das Verfahren die Schritte umfasst:
a) Ermittlung eines funktionalen Zusammenhangs (h = f (a)) zwischen den Schwingungen der Elektrode oder des Tragarms im Betrieb des Lichtbogenofens und der Höhe (h) der Schaumschlacke durch Messung, wobei in dem funktionalen Zusammenhang die Amplitude (A) der Schwingungsbeschleunigung (a) der Schwingungen als Repräsentanz für die Höhe (h) der Schaumschlacke zugrunde gelegt wird;
b) Betreiben des Lichtbogenofens, wobei die momentanen bzw. aktuellen Schwingungen der Elektrode oder des Tragarms gemessen werden, wobei ausgehend von diesen Messwerten über den in Schritt a) bestimmten funktionalen Zusammenhang (h = f (a)) die Höhe (h) der Schaumschlacke bestimmt wird, wobei die Schwingungsbeschleunigung (a) der Elektrode oder des Tragarms mittels eines Beschleunigungssensors ermittelt wird, der an oder in der Elektrode oder am oder im Tragarm befestigt ist,
wobei für die Zugabe des die Höhe der Schaumschlacke bestimmenden Schaumschlackenbildners in das Aufnahmegefäß und/oder auf das schmelzflüssige Material ein experimentell ermittelter funktionaler Zusammenhang zwischen der Masse des zugegebenen Schaumschlackenbildners und der Amplitude der Schwingungsbeschleunigung zugrunde gelegt wird,
wobei die Zugabe des Schaumschlackenbildners in das Aufnahmegefäß und/oder auf das schmelzflüssige Material in der Weise erfolgt, dass die gemessenen Schwingungen einen vorgegebenen Maximalwert nicht überschreiten.

Gleichzeitig kann vorgesehen werden, dass die Zugabe des Schaumschlackenbildners in das Aufnahmegefäß und/oder auf das schmelzflüssige Material in der Weise erfolgt, dass die gemessenen Schwingungen einen vorgegebenen Minimalwert nicht unterschreiten.

Demgemäß wird die optimale Menge an Schlackenbildner (Kohlenstoff) geregelt bzw. gesteuert, so dass einerseits eine zu geringe Schlackenmenge und andererseits eine unerwünschte Aufkohlung des zu verarbeitenden Stahls vermieden werden.

Ferner kann ein definierter Frequenzbereich der Schwingung der Elektrode oder des Tragarms zugrunde gelegt werden.

Als Schaumschlackenbildner wird zumeist feinkörniger Kohlenstoff verwendet, der in das Aufnahmegefäß eingebracht, insbesondere eingeblasen, wird.

Der Beschleunigungssensor ist dabei bevorzugt in einem wassergekühlten Bereich des Tragarms, zum Beispiel im Bereich der Elektroden-Klemmbacken, angeordnet. Die Messwerte der Schwingungsbeschleunigung vom Beschleunigungssensor werden bevorzugt drahtlos, insbesondere per Funk, an eine Auswerteeinheit übermittelt. Möglich ist es alternativ auch, dass die Messwerte der Schwingungsbeschleunigung von einem optischen Beschleunigungssensor über einen Lichtwellenleiter an eine Auswerteeinheit übermittelt werden. Natürlich ist auch eine klassische Übertragung per Kabel möglich. Die für den Betrieb des Beschleunigungssensors und/oder der drahtlosen Übermittlung der gemessenen Daten benötigte Energie kann durch ein Element gewonnen werden, das aus der Schwingungsenergie der Elektrode oder des Tragarms elektrische Energie gewinnt (Energie-Harvester-Modul).

Für die Energieversorgung ist natürlich auch jede andere Möglichkeit gegeben. So kann eine Batterie bzw. ein Akkumulator vorgesehen werden. In Falle der Stromzuführung per Kabel ist eine Kabeldurchführung durch das Innere des Tragarms möglich und vorteilhaft.

Die vorliegende Erfindung ermöglicht somit zunächst die Bestimmung der Schwingungsbeschleunigung des Elektrodentragarms eines Lichtbogenofens per Messung. Hierin enthalten ist die Messung der Schwingungsbeschleunigung zur Erkennung der Resonanzschwingungen des Elektrodentragarms. Schließlich umfasst die Erfindung die Messung der Schwingungsbeschleunigungen und die Kalibrierung des Systems zur verbesserten Ermittlung der Schaumschlackenhöhe im Lichtbogenofen.

Die Messung der Tragarmschwingungen stellt eine wertvolle Information über die Höhe der Schaumschlacke im Inneren des Ofengefäßes dar.

Das vorgeschlagene Verfahren ermöglicht eine kontinuierliche Messung der Tragarmschwingungen mit Hilfe eines oder mehrerer Beschleunigungssensoren. Die Messvorrichtung wird bevorzugt im wassergekühlten Bereich des Elektroden-tragarms nahe der Elektrodenklemme installiert. Die gemessenen Beschleunigungsamplituden werden bevorzugt drahtlos, anhand eines im Elektrodentragarm eingebauten Funkmoduls, an einen Rechner übertragen.

Durch die Überwachung der gemessenen Schwingungen und insbesondere der Amplituden der Schwingungsbeschleunigungen sowie der Frequenzspektren der Schwingungen können die zu Elektrodenbrüchen führenden Resonanzschwingungen des Elektrodentragarms frühzeitig erkannt werden; entsprechend können Maßnahmen zur Vermeidung eines Elektrodenbruchs eingeleitet werden.

Aus dem Vergleich der gemessenen Amplituden A der Schwingungsbeschleunigung mit der Masse M des eingeblasenen Schlackenbildners (Kohlenstoff) kann ein funktionaler Zusammenhang M(t) = f[A(t)] experimentell ermittelt werden. Da die Schaumschlackenhöhe h(t) mit der Masse des zugegebenen Schlackenbildners M(t) in Korrelation steht, lässt sich somit die Höhe h der Schaumschlacke als Funktion der gemessenen Beschleunigungsamplituden A(t) bestimmen (h(t) = f[A(t)]).

Darüber hinaus kann ein Fahrdiagramm für die zuzugebende Masse an Schlackenbildner erarbeitet werden. Mittels des Fahrdiagramms wird dann im praktischen Ofenbetrieb die Masse des eingeblasenen Kohlenstoffs so eingestellt, dass eine hinreichende Höhe der Schaumschlacke gegeben ist, um den Lichtbogen ausreichend (maximal) einzuhüllen. Andererseits kann ein Zugeben von zu viel Kohlenstoff verhindert werden, so dass ein zu starkes Aufkohlen der Schmelze vermieden werden kann.

Somit ist eine Möglichkeit gegeben, den Prozess der Schlackenbildnerzugabe zu automatisieren. Er ist nicht mehr von Erfahrungswerten des Bedienpersonals abhängig.

Die Beschleunigungen der Elektrodentragarme eines Lichtbogenofens werden anhand eines Beschleunigungssensors gemessen und mit Hilfe eines Funkmoduls an einen Rechner des Bedienpersonals übertragen. Damit entsteht die Möglichkeit, Resonanzschwingungen eines Elektrodentragarms frühzeitig zu erkennen und die Höhe der Schaumschlacke in der Flachbadphase zu ermitteln.

Vorteilhaft ist, dass die Beschleunigung der Elektrodentragarme während des Ofenbetriebs gemessen werden können. Dies ermöglicht eine kontinuierliche Prozessüberwachung und eine frühzeitige Erkennung der zu einem Elektrodenbruch führenden Resonanzschwingungen.

Durch die zeitliche Zuordnung des gemessenen Wertes der Beschleunigungsamplitude A(t) zur visuell ermittelten oder gemessenen Höhe h der Schlacke lässt sich der funktionale Zusammenhang h(t) = f[A(t)] bestimmen. Mittels dieses funktionalen Zusammenhangs kann im praktischen Betrieb des Lichtbogenofens die Höhe der Schaumschlacke aus gemessenen Beschleunigungsamplituden ermittelt werden.

Aus dem Vergleich der gemessenen Beschleunigungsamplituden A(t) mit der Menge der eingeblasenen Kohle M(t) lässt sich ein Fahrdiagramm der Kohlzugabe der Form M(t) = f[A(t), h(t)] ermitteln. Nachdem das Diagramm ermittelt wurde, kann die Kohlenstoffzugabe durch gemessene Beschleunigungswerte gesteuert bzw. geregelt werden, so dass ein Freiliegen der Lichtbögen weitgehend vermieden werden kann.

Mit dem vorgeschlagenen Verfahren lässt sich auch im Falle eines Pfannenofens ein kritischer Zustand des Ofenbetriebs frühzeitig erkennen.

Eine autarke Energieversorgung und drahtlose Messdatenübertragung ermöglichen eine einfache Montage der Messausrüstung im wassergekühlten Bereich im Inneren der Elektrodentragarme.

In der Zeichnung ist ein Ausführungsbeispiel der Erfindung dargestellt. Es zeigen:
- Fig. 1: schematisch einen Lichtbogenofen,
- Fig. 2: schematisch den Verlauf der Masse des in den Lichtbogenofen zugegebenen Schaumschlackenbildner als Funktion der Amplitude der Schwingungen des Elektroden-Tragarms und
- Fig. 3: schematisch den Verlauf der Höhe der Schaumschlacke im Lichtbogenofen als Funktion der Amplitude der Schwingungen des Elektroden-Tragarms.

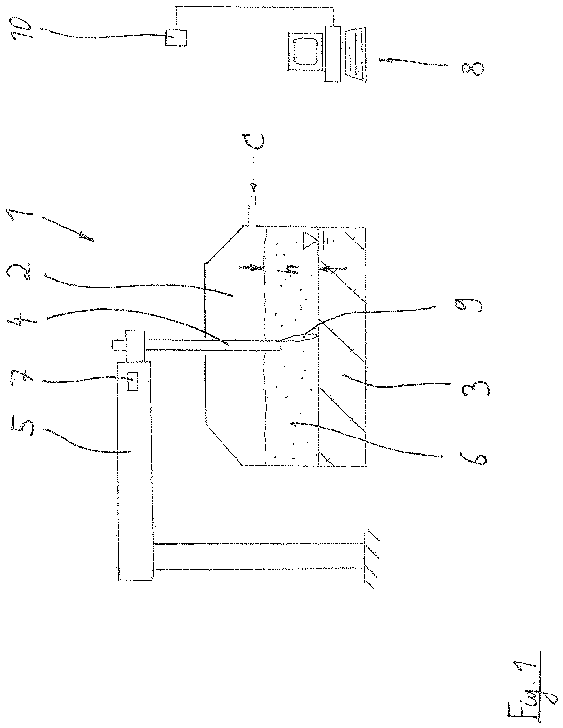

In Fig. 1 ist ein Lichtbogenofen 1 dargestellt, der ein Aufnahmegefäß 2 umfasst, in dem schmelzflüssiges Material 3 aufgeschmolzen werden kann. Hierfür ist eine Elektrode 4 an einem Tragarm 5 angeordnet. Die Elektrode ist mit Starkstrom versorgt, so dass sich ein Lichtbogen 9 bildet, der das schmelzflüssige Material erhitzt. Grundsätzlich kann es sich bei dem Lichtbogenofen um einen Wechselstromofen oder um einen Gleichstromofen handeln.

Durch Eingabe eines Schaumschlackenbildners (Kohlenstoff C) in das Innere des Aufnahmegefäßes 2 wird Schaumschlacke auf der Oberfläche des schmelzflüssigen Materials 3 erzeugt, das eine Höhe h aufweist. Die Höhe h ist dabei einerseits so zu wählen, dass der Lichtbogen 9 bzw. das Ende der Elektrode 4 von Schlacke eingehüllt wird, andererseits ist möglichst, weniger Schaumschlackenbildner C, also Kohlenstoff, zuzugeben, um eine übermäßige Aufkohlung des Materials 3 zu vermeiden. Die Kohle wird dabei unter die Schaumschlacke mit Hilfe eines oder mehrerer Injektoren geblasen.

Um dies zu erreichen, ist ein Beschleunigungssensor 7 im Tragarm 5 eingebaut, der ausgebildet ist, die Schwingungsbeschleunigung a des Tragarms 5 zu messen. Die vom Sensor 7 gemessenen Werte werden drahtlos per Funk an eine Auswerteeinheit 8 übermittelt, die einen Empfänger bzw. Antenne 10 für das Funksignal des Sensors 7 umfasst.

In der Auswerteeinheit 8 wird die Amplitude A der Schwingungsbeschleunigung a ermittelt und der weiteren Analyse bzw. Berechnung zugrunde gelegt.

Demgemäß kann in vorteilhafter Weise die Beschleunigung des Tragarms (es können auch mehrere Tragarme mit mehreren Elektroden vorhanden sein) an der Einspannstelle der Elektrode 4 gemessen und drahtlos an den Rechner des Bedieners übertragen werden. Die zeitabhängige Beschleunigungsmessung wird mit Hilfe des Beschleunigungssensors 7 durchgeführt. Der Sensor wird im wassergekühlten Bereich des Elektrotragarms nahe der Elektrodenklemme installiert mit dem Ziel, die Beschleunigungen in drei Raumrichtungen (x, y, z) zu messen. Der Sensor wird mit einer internen Batterie bzw. einem Akku mit Energie versorgt. Der Sensor kann auch mit einem Energie-Harvester-Modul ausgerüstet werden, so dass der benötigte elektrische Strom aus der Schwingung selbst gewonnen werden kann.

Möglich ist alternativ auch der Einsatz eines optischen Beschleunigungssensors und eines Lichtwellenleiters, über den die gemessenen Beschleunigungswerte optisch übertragen werden können.

Zur Bestimmung eines funktionalen Zusammenhangs zwischen gemessener Amplitude der Schwingungsbeschleunigung und Höhe der Schaumschlacke im Aufnahmegefäß wird wie folgt vorgegangen:
Die zeitabhängigen Amplituden der Schwingungsbeschleunigung A(t) werden mit einer hohen Abtastrate zwischen 100 Hz und 1 kHz erfasst. Das Messsignal wird mit Hilfe des am Elektrodentragarm eingebauten Funkmoduls zu der Auswerteeinheit (PC) übertragen, wo eine Messdatenanalyse und eine Identifikation von Resonanzschwingungen erfolgen.

Gleichzeitig zu den Beschleunigungen wird als weitere Prozessgröße die Masse M bzw. der Massenstrom dM/dt des eingeblasenen Kohlenstoffs gemessen und die Schaumschlackenhöhe h(t) visuell ermittelt oder gemessen. Hierdurch lässt sich die Schaumschlackenhöhe h als Funktion der Amplituden A der Schwingungsbeschleunigung in Form eines Diagramms h(t) = f[A(t)] darstellen.

Darüber hinaus lässt sich ein Fahrdiagramm M(t) = f[A(t), h(t)] der Masse der Kohlenstoffzugabe bestimmen. Das Fahrdiagramm dient dann im praktischen Betrieb zur Optimierung und Automatisierung der Injektion der Feinkohle, so dass der Lichtbogen mit Schaumschlacke voll abgedeckt bleibt.

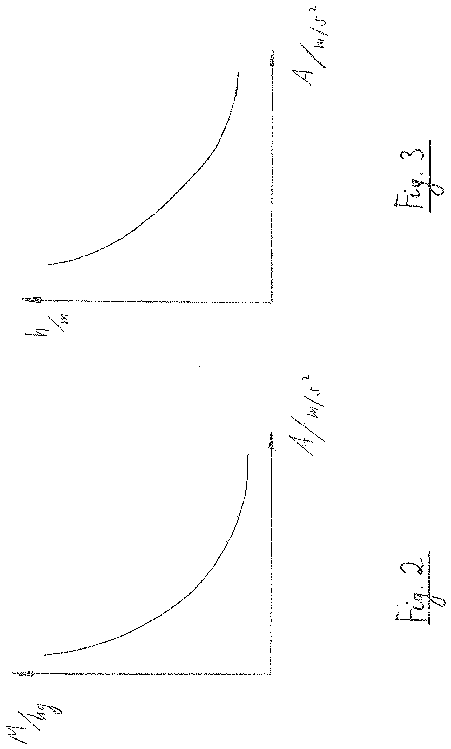

Die erläutere Vorgehensweise bzw. die genannten Zusammenhänge sind in Fig. 2 und in Fig. 3 illustriert.

In Fig. 2 ist der Zusammenhang zwischen der in den Lichtbogenofen eingegebenen Masse M an Schaumschlackenbildner C und der gemessenen Amplitude A der Schwingungsbeschleunigung a dargestellt. In Fig. 3 ist korrespondierenden zu Fig. 2 die Höhe h der Schaumschlacke im Aufnahmegefäß 2 über der gemessenen Amplitude der Schwingungsbeschleunigung skizziert.

Nach der Ermittlung des funktionalen Zusammenhangs h = f(A) zwischen den Amplituden der Schwingungsbeschleunigung der Elektrode 4 bzw. des Tragarms 5 im Betrieb des Lichtbogenofens 1 und der Höhe h der Schaumschlacke 6 durch die genannte Messung ist es folglich möglich, den Lichtbogenofen 1 so zu betreiben, dass die Amplituden der Schwingungsbeschleunigung der Elektrode 4 bzw. des Tragarms 5 per Beschleunigungssensor gemessen werden und ausgehend von diesen Messwerten anhand des bestimmten funktionalen Zusammenhang h = f(A) die Höhe h der Schaumschlacke 6 bestimmt wird. Ausgehend hiervon wiederum kann die Zugabe des Schaumschlackenbildners C in das Aufnahmegefäß so erfolgen, dass die gemessenen Schwingungen einen vorgegebenen Maximalwert nicht überschreiten; gleichzeitig wird allerdings die Zugabe des Schaumschlackenbildners C in der Weise gesteuert bzw. geregelt, dass die gemessenen Schwingungen einen vorgegebenen Minimalwert nicht unterschreiten.

Hiermit wird das gesamte Ofensystem in einem nichtkritischen Zustand bezüglich der Belastung durch Schwingungen und Wärmestrahlung gehalten, gleichzeitig aber auch ein unerwünschtes Aufkohlen des Stahls durch Zugabe von zu viel Kohlenstoff vermieden.

### Bezugszeichenliste:

- 1: Lichtbogenofen / Drehstrompfannenofen
- 2: Aufnahmegefäß
- 3: schmelzflüssiges Material
- 4: Elektrode
- 5: Tragarm
- 6: Schaumschlacke
- 7: Beschleunigungssensor
- 8: Auswerteeinheit
- 9: Lichtbogen
- 10: Empfänger / Antenne

- C: Schaumschlackenbildner
- h: Höhe (m) der Schaumschlacke über dem Metallbad
- a: Schwingungsbeschleunigung (m/s²)
- A: Amplitude der Schwingungsbeschleunigung (m/s²)
- M: Masse des zugegebenen Schaumschlackenbildners (kg)

## Patentansprüche

1. Verfahren zum Betreiben eines Lichtbogenofens (1), wobei der Lichtbogenofen ein Aufnahmegefäß (2) für schmelzflüssiges Material (3) sowie mindestens eine Elektrode (4) umfasst, wobei die Elektrode (4) an einem Tragarm (5) angeordnet ist und von diesem gehalten wird, wobei in das Aufnahmegefäß (2) ein Schaumschlackenbildner (C) eingegeben wird, um auf dem schmelzflüssigen Material (3) eine Schicht Schaumschlacke (6) mit einer Höhe h zu bilden, wobei das Verfahren die Schritte umfasst:
a) Ermittlung eines funktionalen Zusammenhangs h = f (a) zwischen den Schwingungen der Elektrode (4) oder des Tragarms (5) im Betrieb des Lichtbogenofens (1) und der Höhe h der Schaumschlacke (6) durch Messung, wobei in dem funktionalen Zusammenhang die Amplitude A der Schwingungsbeschleunigung a der Schwingungen als Repräsentanz für die Höhe h der Schaumschlacke zugrunde gelegt wird;
b) Betreiben des Lichtbogenofens (1), wobei die Schwingungen der Elektrode (4) oder des Tragarms (5) gemessen werden, wobei ausgehend von diesen Messwerten über den in Schritt a) bestimmten funktionalen Zusammenhang h = f (a) die Höhe h der Schaumschlacke (6) bestimmt wird, wobei die Schwingungsbeschleunigung a der Elektrode (4) oder des Tragarms (5) mittels eines Beschleunigungssensors (7) ermittelt wird, der an oder in der Elektrode (4) oder am oder im Tragarm (5) befestigt ist,
wobei für die Zugabe des die Höhe h der Schaumschlacke (6) bestimmenden Schaumschlackenbildners (C) in das Aufnahmegefäß (2) und/oder auf das schmelzflüssige Material (3) ein experimentell ermittelter funktionaler Zusammenhang zwischen der Masse M(t) = f(A(t)) des zugegebenen Schaumschlackenbildners (C) und der Amplitude A der Schwingungsbeschleunigung a zugrunde gelegt wird,
wobei die Zugabe des Schaumschlackenbildners (C) in das Aufnahmegefäß (2) und/oder auf das schmelzflüssige Material (3) in der Weise erfolgt, dass die gemessenen Schwingungen einen vorgegebenen Maximalwert nicht überschreiten.

2. Verfahren nach Anspruch 1, **dadurch gekennzeichnet, dass** die Zugabe des Schaumschlackenbildners (C) in das Aufnahmegefäß (2) und/oder auf das schmelzflüssige Material (3) in der Weise erfolgt, dass die gemessenen Schwingungen einen vorgegebenen Minimalwert nicht unterschreiten.

3. Verfahren nach Anspruch 1 oder 2, **dadurch gekennzeichnet, dass** in dem funktionalen Zusammenhang ein definierter Frequenzbereich der Schwingung der Elektrode (4) oder des Tragarms (5) als Repräsentanz für die Höhe h der Schaumschlacke zugrunde gelegt wird.

4. Verfahren nach einem der Ansprüche 1 bis 3, **dadurch gekennzeichnet, dass** als Schaumschlackenbildner (C) feinkörniger Kohlenstoff verwendet wird, der in das Aufnahmegefäß (2) eingebracht, insbesondere eingeblasen, wird.

5. Verfahren nach einem der Ansprüche 1 bis 4, **dadurch gekennzeichnet, dass** der Beschleunigungssensor (7) in einem wassergekühlten Bereich des Tragarms (5) angeordnet wird.

6. Verfahren nach einem der Ansprüche 1 bis 5, **dadurch gekennzeichnet, dass** die Messwerte der Schwingungsbeschleunigung a vom Beschleunigungssensor (7) drahtlos, insbesondere per Funk, an eine Auswerteeinheit (8) übermittelt werden.

7. Verfahren nach einem der Ansprüche 1 bis 5, **dadurch gekennzeichnet, dass** die Messwerte der Schwingungsbeschleunigung a von einem optischen Beschleunigungssensor über einen Lichtwellenleiter an eine Auswerteeinheit (8) übermittelt werden.

8. Verfahren nach einem der Ansprüche 1 bis 7, **dadurch gekennzeichnet, dass** die für den Betrieb des Beschleunigungssensors (7) und/oder der drahtlosen Übermittlung der gemessenen Daten benötigte Energie durch ein Element gewonnen wird, das aus der Schwingungsenergie der Elektrode (4) oder des Tragarms (5) elektrische Energie gewinnt.

## Claims

1. Method of operating an arc furnace (1), wherein the arc furnace comprises a receiving vessel (2) for molten material (3) as well as at least one electrode (4), wherein the electrode (4) is arranged at a support arm (5) and held by this, and wherein a foamed slag forming agent (C) is introduced into the receiving vessel (2) so as to form a layer of foamed slag (6) with a height h on the molten material (3),
wherein the method comprises the steps:
a) determining a functional correlationship (h=f(a)) between the oscillations of the electrode (4) or the support arm (5) in operation of the arc furnace (1) and the height (h) of the foamed slag (6) by measurement, wherein in the functional correlationship the amplitude (A) of the oscillation acceleration (a) of the oscillations is taken as representative of the height (h) of the foamed slag;
b) operating the arc furnace (1), wherein the oscillations of the electrode (4) or of the support arm (5) are measured, wherein starting from these measurement values the height (h) of the foamed slag (6) is determined by way of the functional correlationship (h=f(a)) determined in step a), wherein the oscillation acceleration (a) of the electrode (4) or of the support arm (5) is determined by means of an acceleration sensor (7) secured to or in the electrode (4) or to or in the support arm (5),
wherein for the addition of the foamed slag forming agent (C), which determines the height (h) of the foamed slag (6), into the receiving vessel (2) and/or onto the molten material (3) an experimentally determined functional correlationship between the mass (M(t) = f(A(t))) of the added foamed slag forming agent (C) and the amplitude (A) of the oscillation acceleration (a) is taken as a basis,
wherein the addition of the foamed slag forming agent (C) into the receiving vessel (2) and/or onto the molten material (3) is carried in such a way that the measured oscillations do not exceed a predetermined maximum value.

2. Method according to claim 1, **characterised in that** the addition of the foamed slag forming agent (C) into the receiving vessel (2) and/or onto the molten material (3) carried out in such a way that the measured oscillations do not exceed a predetermined minimum value.

3. Method according to claim 1 or 2, **characterised in that** in the functional correlationship a defined frequency range of the oscillation of the electrode (4) or the support arm (5) is taken as representative for the height (h) of the foamed slag.

4. Method according to any one of claims 1 to 3, **characterised in that** fine-grained carbon, which is introduced, in particular blown, into the receiving vessel (2), is used as foamed slag forming agent (C).

5. Method according to any one of claims 1 to 4, **characterised in that** the acceleration sensor (7) is arranged in a water-cooled region of the support arm (5).

6. Method according to any one of claims 1 to 5, **characterised in that** the measurement values of the oscillation acceleration (a) are transmitted from the acceleration sensor (7) to an evaluating unit (8) in wire-free manner, in particular by radio.

7. Method according to any one of claims 1 to 5, **characterised in that** the measurement values of the oscillation acceleration (a) are transmitted from an optical acceleration sensor to a evaluating unit (8) by way of an optical waveguide.

8. Method according to any one of claims 1 to 7 , **characterised in that** the energy needed for operation of the acceleration sensor (7) and/or the wire-free transmission of the measured data is obtained by an element which obtains electrical energy from the oscillation energy of the electrode (4) or of the support arm (5).

## Revendications

1. Procédé pour la mise en service d'un four à arc électrique (1), dans lequel le four à arc électrique comprend une cuve de réception (2) pour une matière en fusion (3) ainsi qu'au moins une électrode (4) ; dans lequel l'électrode (4) est disposée à un bras de support (5) et est maintenue par ce dernier ; dans lequel un formateur de laitier mousseux (C) est introduit dans la cuve de réception (2) pour former, sur la matière en fusion (3), une couche de laitier mousseux (6) possédant une hauteur h, dans lequel le procédé comprend les étapes dans lesquelles :
a) on détermine une relation fonctionnelle h = f(a) entre les vibrations de l'électrode (4) ou du bras de support (5) lors de la mise en service du four à arc électrique (1) et la hauteur h du laitier mousseux (6) via une mesure ; dans lequel, dans la relation fonctionnelle, l'amplitude A de l'accélération du mouvement vibratoire a des vibrations est prise comme référence pour la hauteur h du laitier mousseux ;
b) on met en service le four à arc électrique (1) ; dans lequel on mesure les vibrations de l'électrode (4) ou du bras de support (5) ; dans lequel, à partir de ces valeurs de mesure, on détermine via la relation fonctionnelle h = f(a) déterminée à l'étape a), la hauteur h du laitier mousseux (6) ; dans lequel on détermine l'accélération du mouvement vibratoire a de l'électrode (4) ou du bras de support (5) au moyen d'un capteur de l'accélération (7) qui est fixé à ou dans l'électrode (4) ou bien à ou dans le bras de support (5) ; dans lequel, pour l'addition du formateur de laitier mousseux (C), déterminant la hauteur h du laitier mousseux (6), dans la cuve de réception (2) et/ou sur la matière en fusion (3), une relation fonctionnelle déterminée par expérimentation entre la masse M(t) = f(A(t)) du formateur de laitier mousseux ajouté (C) et l'amplitude A de l'accélération du mouvement vibratoire a est prise comme référence ; dans lequel l'addition du formateur de laitier mousseux (C) dans la cuve de réception (2) et/ou sur la matière en fusion (3), a lieu d'une manière telle que les vibrations mesurées ne dépassent pas vers le haut une valeur maximale prédéfinie.

2. Procédé selon la revendication 1, **caractérisé en ce que** l'addition du formateur de laitier mousseux (C) dans la cuve de réception (2) et/ou sur la matière en fusion (3), a lieu d'une manière telle que les vibrations mesurées ne dépassent pas vers le bas une valeur minimale prédéfinie.

3. Procédé selon la revendication 1 ou 2, **caractérisé en ce que**, dans la relation fonctionnelle, une plage de fréquences définie du mouvement vibratoire de l'électrode (4) ou du bras de support (5) est prise comme référence pour la hauteur h du laitier mousseux.

4. Procédé selon l'une quelconque des revendications 1 à 3, **caractérisé en ce qu'**on utilise, à titre de formateur du laitier mousseux (C) du carbone à grains fins, qui est introduit, en particulier insufflé, dans la cuve de réception (2),

5. Procédé selon l'une quelconque des revendications 1 à 4, **caractérisé en ce que** le capteur de l'accélération (7) est disposé dans une zone du bras de support (5) refroidie à l'eau.

6. Procédé selon l'une quelconque des revendications 1 à 5, **caractérisé en ce que** les valeurs de mesure de l'accélération du mouvement vibratoire a sont transmises par le capteur de l'accélération (7) sans fil, en particulier par voie hertzienne, à une unité d'évaluation (8).

7. Procédé selon l'une quelconque des revendications 1 à 5, **caractérisé en ce que** les valeurs de mesure de l'accélération du mouvement vibratoire a sont transmises par un capteur optique de l'accélération via une fibre optique à une unité d'évaluation (8).

8. Procédé selon l'une quelconque des revendications 1 à 7, **caractérisé en ce que** l'énergie requise pour le fonctionnement du capteur de l'accélération (7) et/ou de la transmission sans fil des données mesurées est obtenue via un élément qui gagne de l'énergie électrique à partir de l'énergie du mouvement vibratoire de l'électrode (4) ou du bras de support (5).
